# EUROPEAN PATENT APPLICATION

(11) **EP 2 639 795 A1**
(43) Date of publication of application: **18.09.2013**
(21) Application number: 10859508.3
(22) Date of filing: 09.11.2010
(51) Int. Cl.: G11B 7/007, G11B 7/0045, G11B 7/09

(54) **INFORMATION RECORDING MEDIUM, INFORMATION REPRODUCING DEVICE, AND INFORMATION RECORDING DEVICE**

(71) Applicant: Kabushiki Kaisha Toshiba, Minato-ku Tokyo 105-8001 (JP)
(72) Inventor: OGAWA, Akihito, Minato-ku, Tokyo 105-8001 (JP); WATABE, Kazuo, Minato-ku, Tokyo 105-8001 (JP); TANIOKA, Chikara, Minato-ku, Tokyo 105-8001 (JP); OKANO, Hideaki, Minato-ku, Tokyo 105-8001 (JP); USUI, Takashi, Minato-ku, Tokyo 105-8001 (JP); DOI, Kazuaki, Minato-ku, Tokyo 105-8001 (JP)
(74) Representative: Henkel, Breuer & Partner
(86) International application number: PCT/JP2010/069954
(87) International publication number: WO 2012/063326

(57) **Abstract**

Provided is an information record-ing medium having a first servo layer, a second servo layer and information recording layers. In the information recording medium, a first spiral track and a second spiral track are formed in different directions in the first servo layer and the second servo layer, respectively. Consequently, a so-called guide layer type information recording medium having the opposite track paths is provided.

## Description

### Technical Field

The present invention relates to an information recording medium, an information reproduction apparatus, and an information recording apparatus.

### Background Art

In order to increase the recording capacities of information recording media such as optical discs, every effort is being made to develop multilayer recording media with multiple data layers for practical use. On the other hand, an increased number of recording layers disadvantageously reduce productivity for information recording media, particularly decreases yield, while increasing cycle time. A step that causes these disadvantages is molding processing of a tracking servomechanism and spiral track grooves (hereinafter referred to as "grooves") that serve as a guide for addressing, into each layer of an information recording medium. For example, given an optical disc with 10 layers, 10 molding processing operations need to be performed on the respective layers using different stampers. This requires a long processing time, and inappropriate molding of even a single layer makes the disc itself defective.

Thus, an information recording medium of a guide layer type has been examined which includes servo layer for tracking servo and a separate data layer in which information is recorded. For example, in an information recording medium with one servo layer and four data layers, intralayer grooves are provided only in the servo layer, and each of the data layers is a flat plane. Thus, in the information recording medium with the servo layer and the separate data layer, molding processing may be carried out exclusively on the servo layer. Thus, advantageously, even when the number of data layers is increased for a larger capacity, the number of molding processing operations is prevented from being increased.

When information is recorded in the information recording medium of the guide layer type, the servo layer and the data layer are simultaneously irradiated with laser light for tracking servo and laser light for information recording and reproduction. The laser light for tracking servo has a wavelength different from the wavelength of the laser light for information recording and reproduction. The laser light for tracking servo returning from the servo layer is used to perform tracking servo control, while the laser light for information recording and reproduction is used to record information in the data layer.

### Prior Art Document

### Patent Document

Patent Document 1: Jpn. Pat. Appln. KOKAI Publication No. 2002-117585

### Summary of the Invention

### Problem to Be Solved by the Invention

Track paths with spirals in all the layers aligned with the same direction are referred to as parallel track paths. Track paths with spirals in adjacent layers spiraling in opposite directions are referred to as opposite track paths. An information recording medium of a guide layer type is desirably provided which comprises opposite track paths.

### Means for Solving the Problem

In general, according to one embodiment, an information recording medium characterized by comprising: a first servo layer, a second servo layer, and a data layer, the information recording medium further comprising: a first spiral track and a second spiral track formed between the first servo layer and the second servo layer and spiraling in opposite directions.

### Brief Description of Drawings

FIG. 1A is a diagram showing the appearance of an information recording medium according to an embodiment.
FIG. 1B is a cross-sectional view of the information recording medium according to the embodiment.
FIG. 2 is a diagram showing the structure of two servo layers and a data layer.
FIG. 3 is a block diagram of an information recording and reproducing apparatus according to the embodiment.
FIG. 4A is a diagram showing the position of a focal spot of laser light and a scanning direction during information recording.
FIG. 4B is a diagram showing the position of the focal spot of laser light and the scanning direction during information recording.
FIG. 5A is a diagram showing a direction in which the focal spot is moved when information is recorded in a plurality of layers.
FIG. 5B is a diagram showing the direction in which the focal spot is moved when information is recorded in the plurality of layers.
FIG. 6 is a diagram showing the physical structure of tracks formed in the servo layer of the information recording medium.
FIG. 7A is a diagram showing an embodiment of a land groove switching marker.
FIG. 7B is a diagram showing an embodiment of a land groove switching marker.
FIG. 7C is a diagram showing an embodiment of a land groove switching marker.
FIG. 8 is a diagram showing a layout of the servo layer and the data layer.
FIG. 9A is a diagram showing BCA information.
FIG. 9B is a diagram showing management information.
FIG. 9C is a diagram showing pre-format information.
FIG. 10 is a diagram showing a layout of an address area in the servo layer.
FIG. 11 is a diagram showing a layout of a physical segment.
FIG. 12A is a diagram showing bit assignment for address information.
FIG. 12B is a diagram showing bit assignment for segment information.
FIG. 13 is a diagram showing wobble modulation and width modulation.
FIG. 14 is a diagram showing examples of a groove address and a land address.
FIG. 15 is a diagram showing a data segment.
FIG. 16A is a diagram showing the physical shape of pre-formatting recording marks.
FIG. 16B is a diagram showing the physical shape of pre-formatting recording marks.
FIG. 17 is a diagram showing a flowchart of a recording operation.
FIG. 18 is a diagram showing a flowchart of a reproducing operation.
FIG. 19 is a diagram showing changes in the state of the data layer during recording.
FIG. 20A is a diagram showing format information.
FIG. 20B is a diagram showing a start point information.
FIG. 20C is a diagram showing an end point information.
FIG. 21 is a diagram showing another embodiment of the physical structure of tracks.
FIG. 22 is a diagram showing bit assignment for pit address units.

### Mode for Carrying Out the Invention

### (Information recording medium)

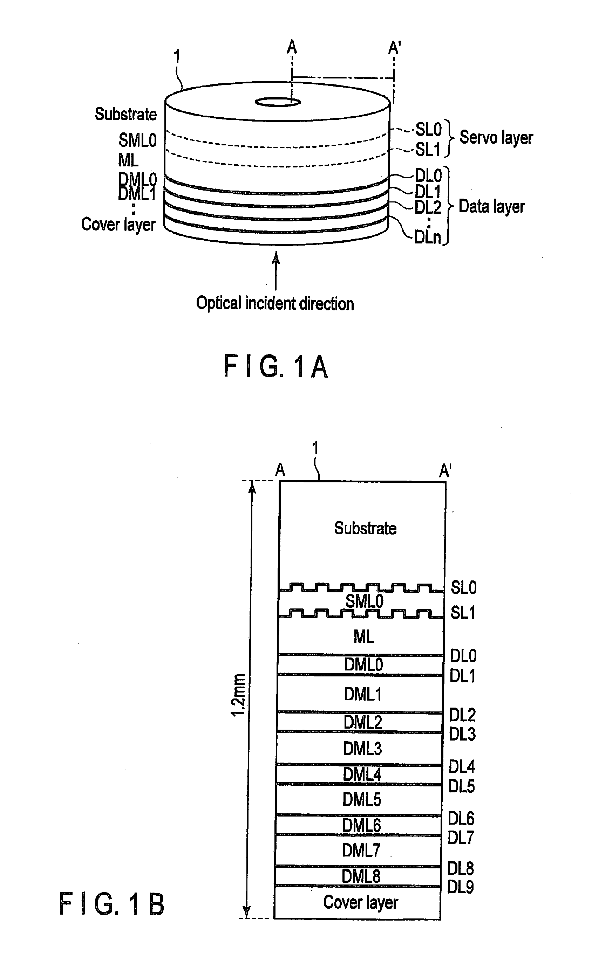

FIG. 1 shows an information recording medium 1. FIG. 1A shows the appearance of the medium. The information recording medium 1 is shaped like a disc and comprises a clamping hole in the center thereof. The medium 1 has a layered structure in which two servo layers and a plurality of (n) data layers are formed. The data layers are arranged closer to an optical incident side and the servo layers are arranged further from the optical incident side. FIG. 1B is a cross-sectional view of the medium 1 taken along a position A-A'. The layers are formed in the following order as seen from a side far from the optical incident side: a disc substrate, servo layer #0 (SL0), middle layer #0 between servo layers (SML0), servo layer #1 (SL1), a middle layer (ML), data layer #0 (DL0), middle layer #0 between data layers (DML0), and data layer #1 (DL1). A layer located closest to the optical incident side is a cover layer. For example, the medium 1 is 1.2 mm in thickness, and the substrate is about 0.8 mm in thickness. SMLO has a thickness of 55 µm, and the thickness is determined with the wavelength of laser light (for example, 605 nm) taken into account. The middle layer is 126 µm in thickness. The middle layer between the data layers has a plurality of types of thicknesses. For example, given a first type of layers that are relatively thin and a second type of layers that are relatively thick, middle layers between data layers which have even numbers (DML0, DML2, . . . , DML8) have a first type of thickness, for example, about 12 µm, and middle layers between data layers which have odd numbers (DML1, DML3, ... , DML9) have a second type of thickness, for example, about 16 µm. The thicknesses are set such that the adjacent middle layers have different values so as to prevent reflected light from the back surface of a non-reproduction layer from being concentrated on a reproduction layer. Moreover, for the group of the even-numbered middle layers and the group of the odd-numbered middle layers, the group with the smaller number of layers is preferably set to have the smaller thickness to reduce the total thickness and thus aberration that may be result from reproduction carried out on rearward layers. The cover layer is 50 µm in thickness. The thickness of each layer is determined by the type of wavelength of laser light concentrated on the servo layer and the data layer. Laser light for servo control concentrated on the servo layer has a long wavelength. Thus, to reduce the adverse effect of crosstalk between the layers, the middle layer between servo layers is preferably set thicker than the middle layer between data layers. Furthermore, no interlayer jumping operation (described below) is performed between the servo layer and the data layer, and thus the middle layer is preferably set further thicker than the middle layer between servo layers to reduce crosstalk. Furthermore, if the middle layers between data layers are alternately changed in thickness so that even numbered layers are thicker, while odd numbered layers are thinner, the adverse effect of multipath reflection can be reduced. The above-described three types of middle layers have a transmittance of nearly 100% with respect to laser light for servo control and laser light for information recording.

The servo layer is formed of a film such as metal which has a thickness of submicron order. In particular, servo layer #0 is formed of a semitransmissive film that reflects part of the laser light for servo control, while allowing part of the laser light for servo control to pass through. Furthermore, a track structure serving as a guide for servo control is formed in the servo layer. The data layer is formed of a multilayer film containing a recording material that enables information to be recorded, reproduced, or erased by the laser light for information recording. The multilayer film allows the laser light for servo control to pass through, allows part of the laser light for information recording to pass through, and reflects and absorbs part of the laser light for information recording.

### (Structure of the servo layer and the data layer)

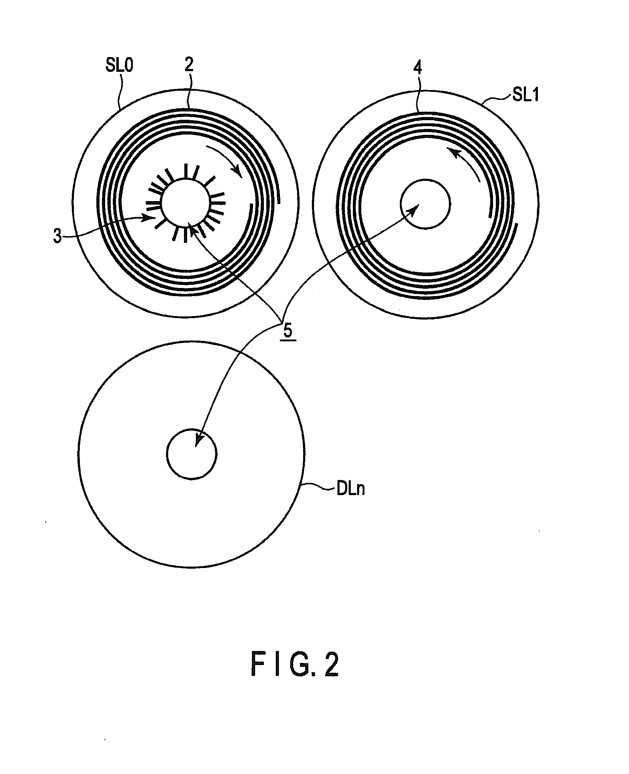

FIG. 2 shows the structure of the servo layer (two layers) and the data layer. In SL0, a spiral track 2 is formed all over the surface of the layer. Moreover, burst cutting area (BCA) information 3 is formed at the innermost circumference by radially extending marks. In SL1, a spiral track 4 spiraling in a direction opposite to the direction in which the spiral in SL0 extends is formed all over the surface of the layer. On the assumption that the spiral track 2 in SL1 is formed clockwise, the spiral track 4 in SL1 is formed counterclockwise. The spiral may be formed in alternately opposite directions in the respective layers. However, the description below assumes the above-described directions unless otherwise specified. On the other hand, no structure such as a track is formed in a data layer DLn. An information recording portion of the data layer DLn has sufficiently high flatness with respect to the laser wavelength for information recording and reproduction. Recesses and protrusions of the data layer DLn have a maximum amplitude less than or equal to one-thirtieth of the laser wavelength for recoding and reproduction, with respect to an optical path length. For example, if the laser light for recording and reproduction has a wavelength of 405 nm and the medium has a refractive index of 1.6, then the data layer DLn comprises no recesses or protrusions that are greater than 8 (= 405 ÷ 30 ÷ 1.6) nm in height. As a result, the data layer is unlikely to be subjected to unwanted optical diffraction caused by the recessed and protruding structure, thus improving the stability of information recording and reproduction. Additionally, in FIG. 2, a clamp hole is shown at 5.

As described above, the information recording medium according to the present embodiment comprises the two servo layers with the spiral tracks therein spiraling in the opposite directions. Thus, when information is recorded in the data layer, the recording can be carried out using the opposite track paths, enabling high speed recording. Furthermore, buffer memory required for an information recording and reproducing apparatus can be reduced.

### (Information recording and reproducing apparatus)

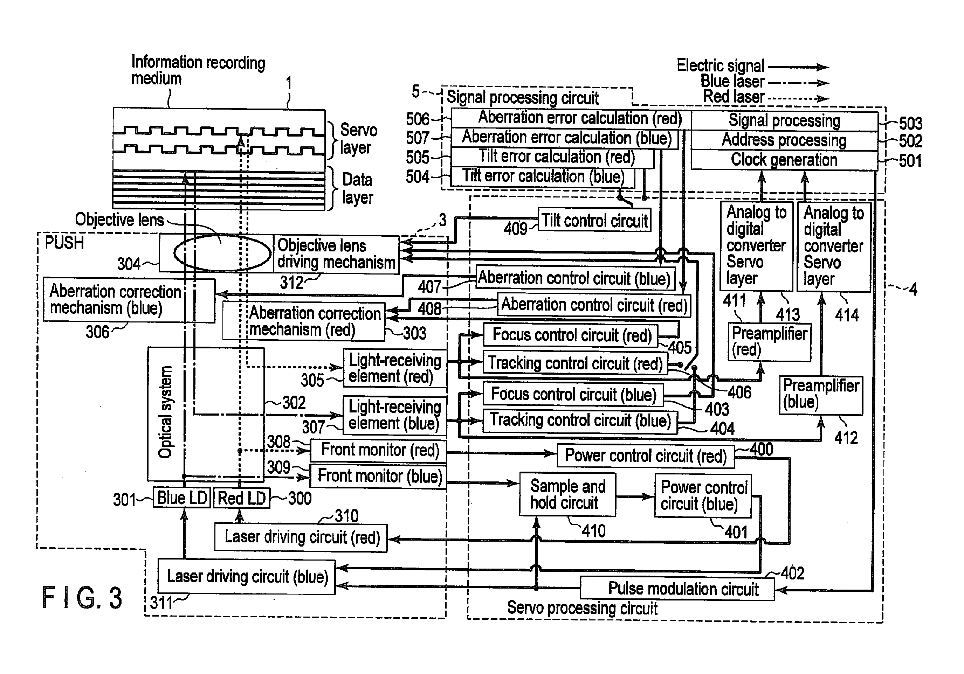

FIG. 3 is a block diagram of an information recording and reproducing apparatus according to the present embodiment. The information recording and reproducing apparatus comprises a pickup head (PUH) 3 that emits or receives laser light for recording and reproduction, a servo processing circuit 4 that controls various mechanisms, and a signal processing circuit 5 that various types of signal processing. Furthermore, PUH 3 is connected to a PUH driving mechanism and can be moved in a radial direction of the medium by the PUH driving mechanism. The servo circuit and the signal processing circuit 5 are connected to a controller that controls the signal processing circuit 5 and the servo processing circuit 4 based on instructions from a higher system. The information processing apparatus further comprises a rotary driving mechanism that rotationally drives the information recording medium to record or reproduce information in or from the medium.

### (Configuration and recording operation of the information recording and reproducing apparatus)

The configuration of each section and the flow of signals during recording and reproduction of information in and from an information recording medium will be described.

### (PUH)

PUH 3 comprises a laser diode (red LED) 300 that is a light source for red laser light that is laser light for servo control and which has a wavelength of 650 nm and a laser diode (blue LD) 301 that is a light source for blue laser light that is laser light for information recording and reproduction and which has a wavelength of 405 nm. The two lasers can be simultaneously turned on to record or reproduce information. The red laser light enters an optical system 302 and is then split into light for front monitoring and light for medium irradiation. The light for medium irradiation is concentrated on the servo layer of the information recoding medium 1 through a red laser aberration correction mechanism 303 and an objective lens 304. Furthermore, the light returning from the servo layer follows the same path and returns to the optical system 302. The light is then converted into an electrical signal by a light-receiving element 305 for red laser light. Likewise, the blue laser light enters the optical system 302 and is then split into light for front monitoring and light for medium irradiation. The light for medium irradiation is concentrated on the data layer of the information recoding medium 1 through a blue laser aberration correction mechanism 306 and the objective lens 304. The light returning from the servo layer follows the same path and returns to the optical system 302. The light is then converted into an electrical signal by a light-receiving element 307 for blue laser light. The objective lens 304 is driven in a focus direction and a tracking direction by an objective lens driving mechanism 312 and also has its tilt state controlled by a tilt control circuit 409. The aberration correction mechanism (red or blue) 303 or 306 applies various types of aberration such as spherical aberration, astigmatism, and coma aberration to passing laser light to control wave aberration. The light for front monitoring is received and converted into an electrical signal by a front monitor (red or blue) 308 or 309.

### (Servo processing circuit)

The servo processing circuit 4 generates various control signals based on electrical signals output by PUH 3 to control PUH 3. Electrical signals output by the front monitor (red or blue) 308 or 309 are input to a power control circuit (red or blue) 400 or 401 via a sample-and-hold circuit 410. The circuit 400 or 401 controls a laser driving circuit (red or blue) 310 or 311 so that the signals have desired values. Furthermore, during information recording, a pulse modulation circuit 402 controls the laser driving circuit 311 based on a clock signal and a recording data signal from the signal processing circuit 5 to modulate the intensity of blue laser light into a pulse. For example, the modulation is such that the laser light is increased in intensity for "1" portions of recording data and is turned off for "0" portions of the recording data.

An output signal from the light-receiving circuit (blue) 307 is input to a focus control circuit (blue) 403 and a tracking control circuit (blue) 404. The focus control circuit (blue) 403 carries out arithmetic processing based on a knife-edge method or an astigmatic method to generate a focus error signal. Moreover, the focus control circuit (blue) 403 uses the generated signal to control an objective lens driving mechanism 312 so that the focal spot of blue laser light is concentrated on the desired data layer. When information recorded in the data layer is reproduced, the tracking control circuit 404 carries out arithmetic processing based on a differential push-pull (DPP) method to generate a tracking error signal. Moreover, the tracking control circuit 404 uses the generated signal to control the objective lens driving mechanism 312 and the PUH driving mechanism to allow the focal spot of the blue laser light to follow the desired track.

An output signal from the light-receiving circuit (red) 305 is input to a focus control circuit (red) 405 and a tracking control circuit (red) 406. The focus control circuit (red) 405 carries out arithmetic processing based on the knife-edge method or the astigmatic method to generate a focus error signal. Moreover, the focus control circuit (red) 405 uses the generated signal to control the aberration correction mechanism (red) 303 so that the focal spot of red laser light is concentrated on the desired data layer. When information is recorded in the data layer, the tracking control circuit carries out arithmetic processing based on the push-pull method to generate a tracking error signal. Moreover, the tracking control circuit uses the generated signal to control the objective lens driving mechanism 312 and the PUH driving mechanism to allow the focal spot of the red laser light to follow the desired track. At this time, the radial position of the focal spot of the blue laser light is controlled similarly to the radial position of the focal spot of the red laser light.

### (Signal processing circuit)

Output signals from the light-receiving elements (red and blue) 305 and 307 pass through pre-amplifiers (red and blue) 411 and 412 of the servo processing circuit 4 and are then subjected to analog-to-digital conversion by analog-to-digital conversion circuits 413 and 414. The resultant signals are input to the signal processing circuit 5. The signal processing circuit 5 comprises a clock generation block 501 that generates a clock signal from an input signal, an address processing block 502 that reads address information, a signal processing block 504 that, for example, converts read and write information for record information, aberration error calculation blocks 506 and 507 that calculate an aberration error amount, and tilt error calculation blocks 504 and 505 that calculate a tilt error amount. Reading of record information involves execution of various types of filtering, PRML and demodulation, and an error correcting process. Conversion of write information involves execution of modulation such as a 17 modulation, error correcting coding using a Reed-Solomon (RS) code or a Low-Density Parity-Check (LDPC) code, insertion of a data ID, and the like. A value calculated by each of the blocks is used as a control signal for the servo processing circuit 4, and read address information and recording data are transmitted to a controller (not shown in the drawings).

### (Order of recoding and reproduction)

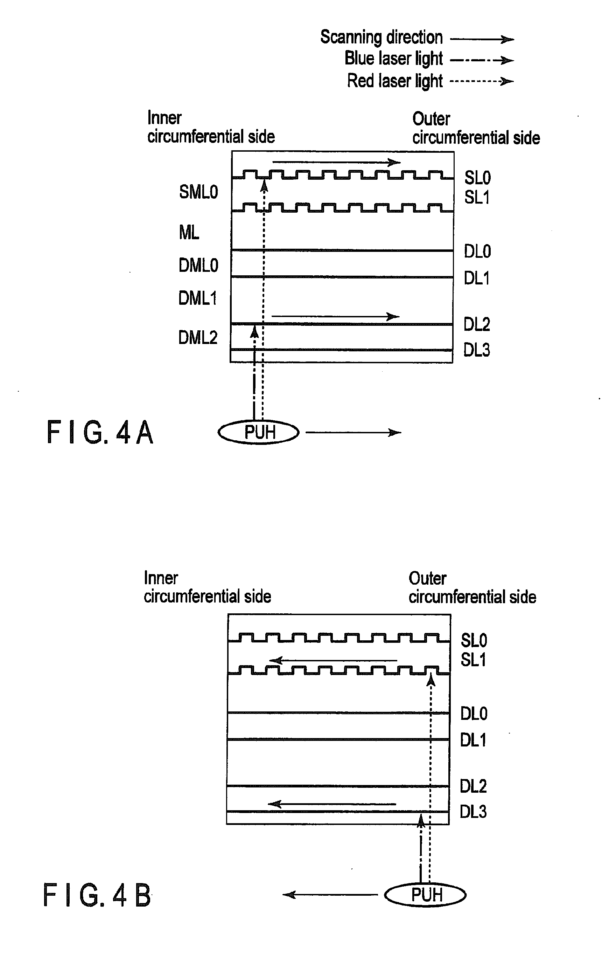

FIG. 4 shows the positions of the focal spots of red laser light and blue laser light and a scanning direction. The information recoding and reproducing apparatus according to the present embodiment switches the number of the servo layer to be utilized between recording in the even-numbered data layers and recording in the odd-numbered data layers. Specifically, red laser light is concentrated on SL0. On the other hand, for recording in the even-numbered data layers, red laser light is concentrated on SL1. FIG. 4A shows how information is recorded in the even-numbered data layers (DL0, DL2, ...). FIG. 4B shows how information is recorded in the odd-numbered data layers (DL1, DL3, ...).

In FIG. 4A, red laser light (dotted line) is concentrated on SL0, and the information recording and reproducing apparatus carries out tracking control to move PUH 3 in the radial direction based on a signal from SL0. Thus, the focal spot of the red laser light follows the track in SL0. On the other hand, blue laser light (alternate long and short dash line) is concentrated on DL2 that is an even-numbered data layer. Here, the focal spot of the blue laser light also moves in step with movement of PUH 3 so as to maintain the same radial position as that of the focal spot of the red laser light. The information recording medium 1 is controlled so as to rotate counterclockwise, and SL0 comprises a clockwise spiral track. Thus, PUH 3 moves from an inner circumferential side to an outer circumferential side over time. At the same time, the focal spot of the blue laser light also moves from the inner circumferential side to the outer circumferential side. As a result, information is recorded in the even-numbered data layers in a clockwise spiral manner as in the case of SL0. Here, a sequence of recording marks recorded in the data layer is referred to as a recording track.

In FIG. 4B, red laser light (dotted line) is concentrated on SL1, and the information recording and reproducing apparatus carries out tracking control to move PUH 3 in the radial direction based on a signal from SL1. Thus, the focal spot of the red laser light follows the track in SL1. On the other hand, blue laser light (alternate long and short dash line) is concentrated on DL3 that is an odd-numbered data layer. Here, the focal spot of the blue laser light also moves in step with movement of PUH 3 so as to maintain the same radial position as that of the focal spot of the red laser light. The information recording medium 1 is controlled so as to rotate counterclockwise, and SL1 comprises a counterclockwise spiral track. Thus, PUH 3 moves from the outer circumferential side to the inner circumferential side over time. At the same time, the focal spot of the blue laser light also moves from the outer circumferential side to the inner circumferential side. As a result, information is recorded in the odd-numbered data layers in a counterclockwise spiral manner as in the case of SL1.

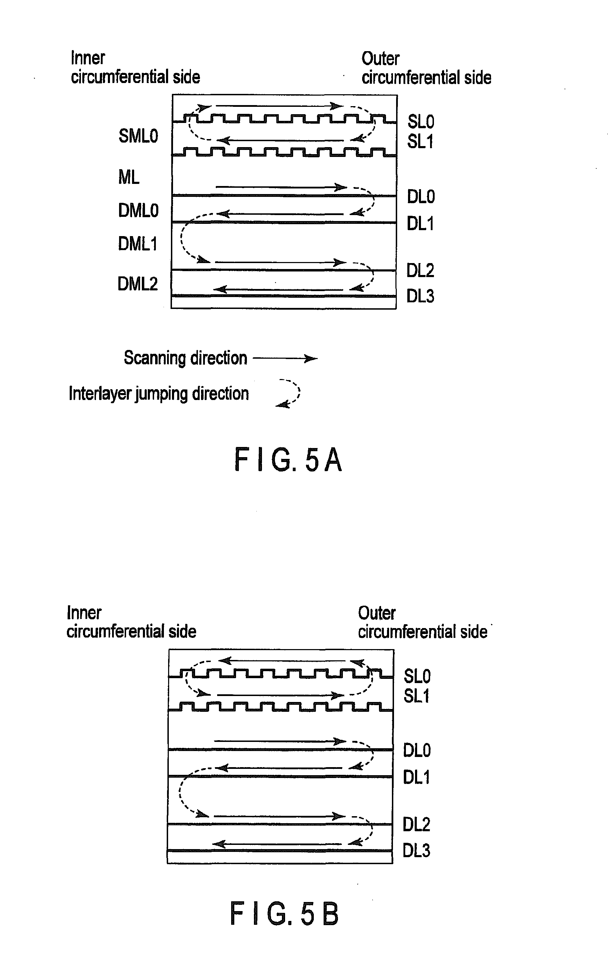

FIG. 5A shows the direction in which the focal spot is moved when information is consecutively recorded in a plurality of layers. The recording of the information starts with the inner circumference of DL0 and reaches the outer circumference. Then, the information recording and reproducing apparatus drives PUH 3 in the focus direction to allow interlayer jumping of the focal spot to the outer circumference of DL1. At the same time, the aberration correction mechanism (red) 303 is driven to allow interlayer jumping of the focal spot of the red laser light concentrated on the servo layer, from SL0 to SL1. After the jumping is completed, the recording is resumed to move from the outer circumference to inner circumference of DL1. In this manner, the information recording and reproducing apparatus repeats recording simultaneous with movement toward the outer circumference and recording simultaneous with movement toward the inner circumference. Recording in such an order enables the consecutive recording state to be maintained except for the time required for the interlayer jumping. Moreover, recording tracks formed based on the record information form opposite track paths in which the direction of the spiral in the even-numbered layer is opposite to the direction of the spiral in the odd-numbered layer. Thus, when record information is reproduced, consecutive reproduction can be carried out in the same order as that in FIG. 5A.

FIG. 5B shows another embodiment of consecutive recording of information in a plurality of layers starting with DL0. According to this embodiment, for the middle layers (DML0, DML2, ...) between the even-numbered data layers, that is, under the smaller thickness condition, the direction of interlayer jumping of the focal spot in the servo layer is opposite to the direction of interlayer jumping of the focal spot in the data layer. For the middle layers (DML1, ...) between the odd-numbered data layers, that is, under the larger thickness condition, the direction of interlayer jumping of the focal spot in the servo layer is the same as the direction of interlayer jumping of the focal spot in the data layer. In this case, in contrast to the description of FIG. 4, PUH 3 needs to move from the inner circumferential side to the outer circumferential side during reproduction from SL0 and from the inner circumferential side to the outer circumferential side during reproduction from SL1. This can be achieved by forming the spiral track in SL1 counterclockwise while forming the spiral track in SL1 clockwise, or rotating the information recording medium 1 clockwise with the structure of the information medium unchanged. During interlayer jumping, the objective lens 304 is moved to simultaneously move the positions of the spots of laser light for servo layer reproduction and laser light for data layer reproduction. Thus, the focus control circuit (red) 405 and the focus control circuit (blue) 403 need to operate in corporation. As described above, when the directions of interlayer jumping of the laser light for servo layer reproduction and the laser light for data layer reproduction are opposite under the smaller servo layer thickness condition and are the same under the larger servo layer thickness condition, a smooth cooperative operation can be achieved particularly under the larger servo layer thickness condition, which is significantly affected by the movement of the objective lens.

### (Physical structure of tracks)

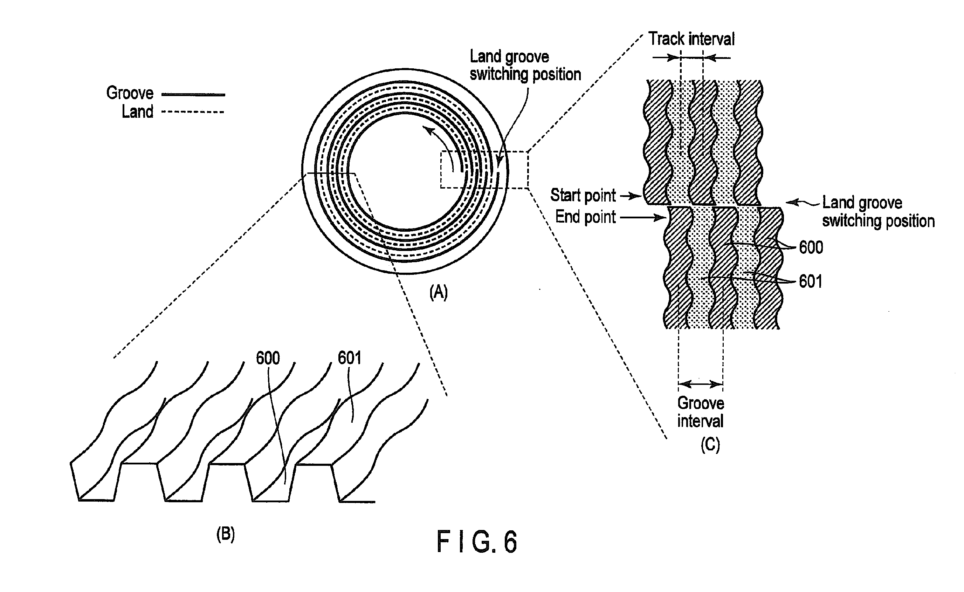

FIG. 6 shows the physical structure of tracks formed in the servo layer of the information recording medium 1. FIG. 6(A) shows spiral tracks recorded in the servo layer. The spiral tracks are formed by engraving a groove (600) in a surface called a land (601) as shown in FIG. 6(B). The groove is formed to meander based on wobble modulation and width modulation described below. FIG. 6(C) is an enlarged diagram of the tracks at a land groove switch position. Here, the interval between the center lines of two adjacent grooves 600 is referred to as a groove interval. The interval between a track along which the focal spot actually moves spirally and the adjacent track is referred to as a track interval. Since the grooves 600 are formed spirally, the end point of one groove along the circumference of the medium is displaced from the start point of the groove by the half of the groove interval. Moreover, at the land groove switching position, the groove 600 is temporarily discontinued, and the start point of the next groove 600 is displaced outward from the start point of the last groove 600 by the half of the groove interval. When tracking this structure, the information recording and reproducing apparatus alternately switches a tracking target at the land groove switching position from the center of the groove 600 to the center of the land 601 or from the center of the land 601 to the center of the groove 600. That is, the tracking is carried out on the groove, the land, and the groove in order along the circumference of the disc. As a result, the focal spot moves along one spiral line in which the spirals are arranged at intervals each equal to the half of the groove interval. Thus, the information recording medium 1 has a single spiral structure with a sequence of the land tracks 601 and the groove tracks 600. As a result, the recording tracks formed in the data layer are also arranged at intervals each equal to the half of the groove interval. Recording at this interval enables an increase in recording density compared to recording at the groove interval.

The single spiral track in which the position of each groove is displaced from the adjacent groove has the advantage of increasing the recording density but the disadvantage of failing to record a signal in the portion where the land is switched to the groove or vice versa in a normal optical disc in which signals are recorded on tracks. However, the information recording medium 1 according to the present embodiment separates the servo layer from the data layer to allow information to be consecutively recorded even in the switching portion in the data layer. Thus, the information recording density can be increased. Moreover, advantageously, the recording tracks formed in the data layer form the single spiral track with the consecutive recording tracks, facilitating reproduction of information.

The wobbles of the groove can be formed during manufacture of the information recording medium 1 by slightly vibrating a beam cutting the groove in a direction perpendicular to a traveling direction. Furthermore, the width modulation of the groove can be achieved by changing the intensity of the beam cutting the groove in modulation portions, increasing the intensity in the thicker portion while reducing the intensity in the thinner portion. Additionally, the width modulation of the land portion can be achieved by reversing the phase of wobbling vibration on the opposite sides of the modulation portion of the land portion. The width modulation is characterized by allowing information such as address information to be recorded separately in the land and in the groove but poses the following problem in a normal optical disc. Since, in the normal optical disc, signals are recorded on tracks, the width of the track changes in width modulation portions. Thus, recording signals may become unstable or a signal from a track may leak into a reproduction signal for record information. In contrast, in the information recording medium 1, the servo layer is separate from the data layer. This prevents the data layer from undergoing the adverse effects on the record information which result from a change in the width of the groove or the land caused by the width modulation. Also during signal reproduction, the leakage of a track signal into a reproduction signal in the width modulation portion is prevented. As a result, information can be stably recorded and reproduced.

### (Track polarity switching signal)

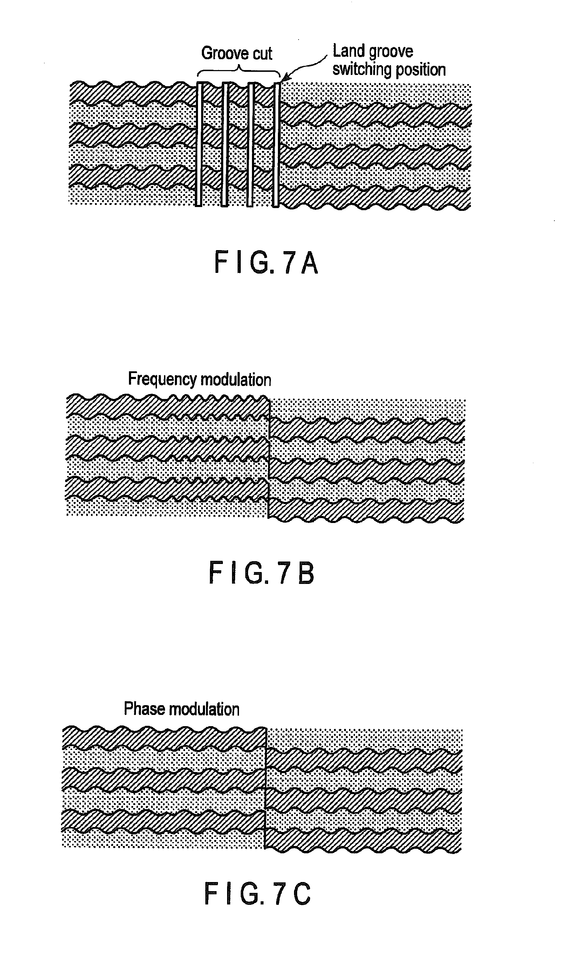

FIG. 7 shows various embodiments of land groove switching markers indicating a land groove switching position. The switching marker shown in FIG. 7A is a groove cut in which a groove is intermittently discontinuous immediately before a land groove switching position. In this case, the amount of returning red laser light changes at this groove cut position. Thus, by detecting the change in the amount of light, the information recording and reproducing apparatus can detect the land groove switching position immediately before the land groove switching position to appropriately switch the polarity of the tracking. Furthermore, since the information recording medium 1 according to the present embodiment comprises the data layer and the separate servo layer, information can be consecutively recorded in the data layer even while the red laser light is passing over the groove cut position. According to another embodiment, a switching marker shown in FIG. 7B is configured to modulate the frequency of wobble modulation of the groove immediately before the land groove switching position.

### (Layout of the servo layer and the data layer)

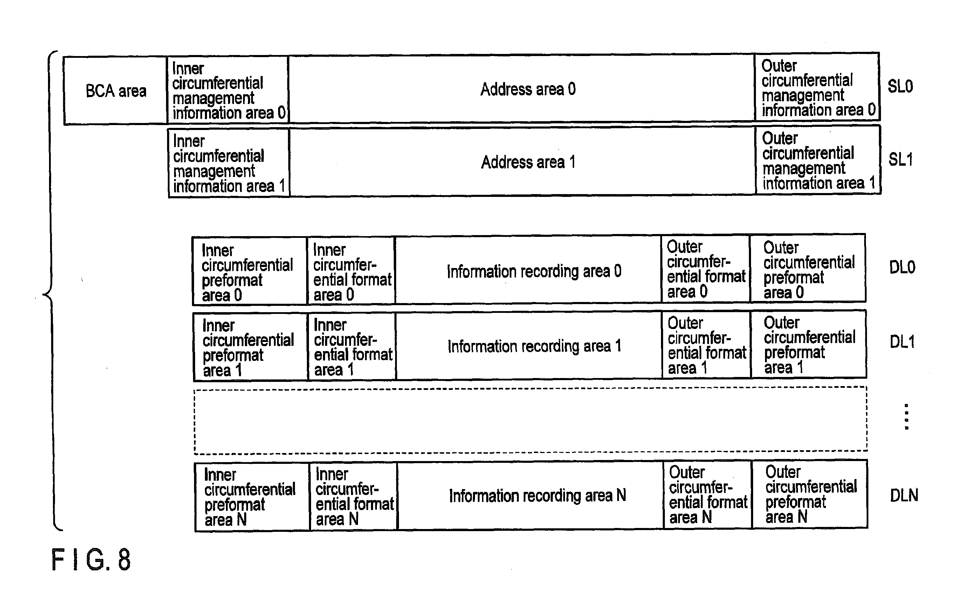

FIG. 8 shows a layout of the servo layer and the data layer. In the servo layer SL0, a BCA area, an inner circumferential management area 0, an address area 0, and an outer circumferential management area 0 are arranged in this order from the inner circumferential side. In the servo layer SL1, an inner circumferential management area 1, an address area 1, and an outer circumferential management area 1 are arranged in this order from the inner circumferential side. In the data layer, an inner circumferential pre-format area, an inner circumferential format area, a data layer, an outer circumferential format area, and an outer circumferential pre-format area are arranged in this order from the inner circumferential side.

In the BCA area of the servo layer, BCA information including medium identification information and encryption key information is recorded in BCA marks extending in the radial direction of the medium. Inner and outer circumferential management information is recorded using grooves or pit rows subjected to wobble modulation at a frequency different from the frequency for the address area; the inner and outer circumferential management information includes the type of medium and the optimum recording conditions and is required to manage the information recording medium 1. In the address area, tracks are formed using grooves, and address information is recorded in the grooves by subjecting the grooves to wobble modulation and width modulation.

Before the disc is shipped, a pre-writer or the like records medium layer information and information for management in the inner and outer circumferential pre-format areas of the data layer using radial or elliptic recording marks. No information is recorded in the inner and outer circumferential pre-format areas before user information or the like is recorded therein. When information is recorded in the inner and outer circumferential pre-format areas, the information recording and reproducing apparatus carries out test recording to adjust recording conditions. Moreover, format information is recorded in the inner and outer circumferential pre-format areas to manage user information recorded in an information area. No information is recorded in the information recording area before the user information or the like is recorded therein. During information recording, the user information or the like is recorded as a sequence of recording marks in accordance with tracks in the servo layer.

### (Contents of system information)

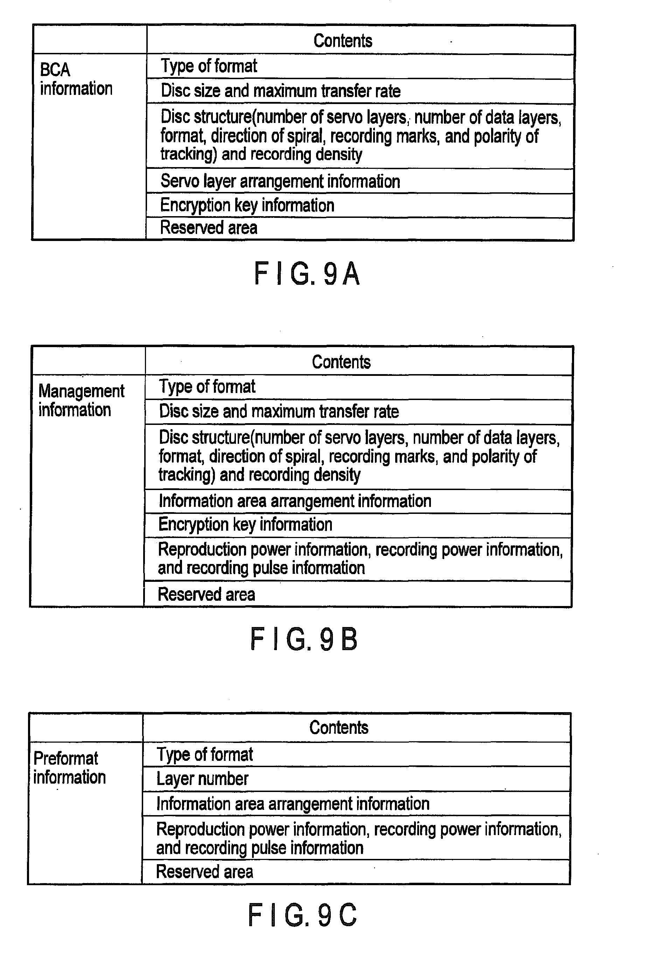

FIG. 9 shows the contents of the BCA information, the management information and the pre-format information. All of the information is recorded in the disc by a medium maker before shipment of the medium.

FIG. 9A is a list regarding the contents of the BCA information. A format type is information indicative of the type of medium format, for example, the name of the type or a code indicative of a write-once type, a rewritable type, a read only type, a hybrid type. A disc size is indicative of one of various physical disc sizes. A disc structure is indicative of information such as the number of servo layers in the medium, the number of data layers in the medium, the type of format of each of the layers, the direction of the spiral, the recording marks, and the polarity of tracking. Servo layer arrangement information is indicative of addresses for the inner and outer circumferential management areas of the servo layer and the start and stop positions of the address area. Encryption key information is indicative of a code for an encryption key for use in encryption and decryption processing for recording and reproduction of the user information and the like. A reserved area is indicative of an area in which certain information is to be recorded in the future.

FIG. 9B is a list regarding the contents of the management information. Information area arrangement information is indicative of the addresses of address areas corresponding to the start and stop positions of the inner and outer circumferential format areas of the data layer and the addresses of address areas corresponding to the start and stop positions of the information recording area. Reproduction power information, recording power information, and recording pulse information are indicative of codes representing the optimum reproduction power, the optimum recording power, and the optimum shape of a recording pulse which correspond to each data layer, a recording speed, and the like. As described above, the information on the reproduction power for the data layer is recorded in the servo layer. Thus, the information recording and reproducing apparatus can subject the servo layer to reproduction with only the laser light for servo layer reproduction turned on, check the optimum reproduction power for the data layer, and then turn on the laser light for data layer reproduction with the optimum power. This allows a disadvantageous situation to be avoided in which the data layer is subjected to reproduction with excessively high power to damage information previously recorded in the data layer.

FIG. 9C is a list regarding the contents of the pre-format information. Each item of information in the pre-format area is indicative of information on the layer in which the item of pre-format information is recorded. Thus, the format type in the pre-format information is indicative of a code identifying the type of format of this layer, for example, the write-once type, the rewritable type, and the read-only type even if for example, the medium itself is of the hybrid type with layers in plurality of formats. A layer number is indicative of the number of the layer in which the item of pre-format information is recorded. The reproduction power information, the recoding power information, and the recording pulse width information are similarly indicative of the optimum values for the layer in which the item of pre-format information is recorded.

### (Layout of the address area)

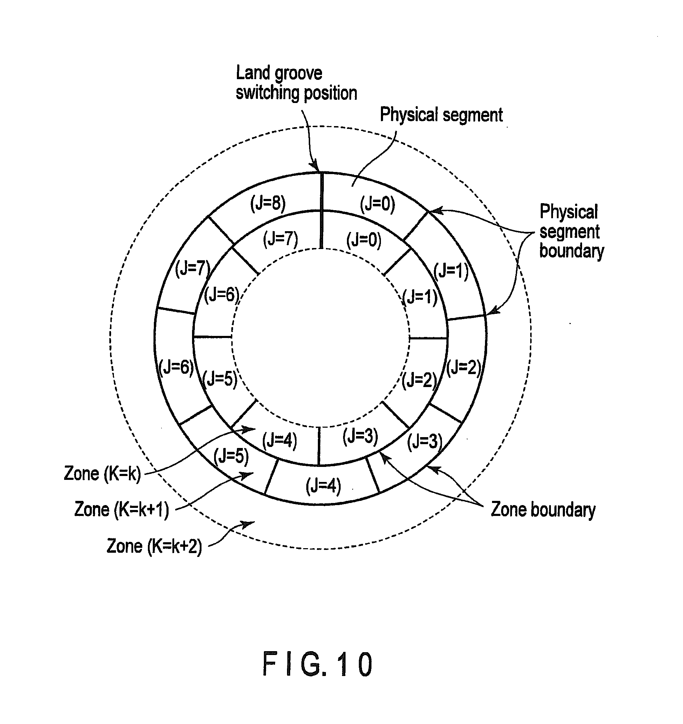

FIG. 10 shows a layout of the address area of the servo layer. The address area is partitioned into zones on concentric circles each of which contains a plurality of tracks and to which zone numbers (K) are assigned. The zone number increments with respect to the traveling direction for the tracks. That is, in the medium shown in FIG. 5A, the zone number in SL0 increments from the inner circumference toward the outer circumference, and the zone number in SL1 increments from the outer circumference toward the inner circumference. Furthermore, each track is partitioned into physical segments by physical segment boundaries. The number of physical segments contained in one track is constant within each zone, and is smaller by one than the number of physical segments contained in one track in the outer-circumferentially adjacent zone. A physical segment number (J) is assigned to each physical segment. The physical segment number is zero immediately after the land groove switching position and increments in the traveling direction for the tracks. Moreover, each track is provided with a track number. The track number is zero for the first track and increments in the traveling direction.

Furthermore, the wobbles are formed such that all the physical segments involve wobble modulation or width modulation with the same wave number. Thus, one track involves the same wave number within each zone. As a result, within the zone, the physical period of the wobble or width modulation is short on the inner circumferential tracks and slightly longer on the outer circumferential tracks. Additionally, the wobble or width modulation for the inner circumferential tracks has almost the same period for all the zones.

During recording and reproduction, the information recording and reproducing apparatus controls rotation of the disc so that reproduction signals for the wobbles have a constant period. That is, within each zone, the disc is rotated at a constant angular velocity, and when PUH shifts to the next zone, the angular velocity is changed. As a result, in a broad way, the disc as a whole is controlled at a constant linear velocity (CLV). Such a scheme is referred to as zoned constant linear velocity (ZCLV).

### (Layout of the physical segment)

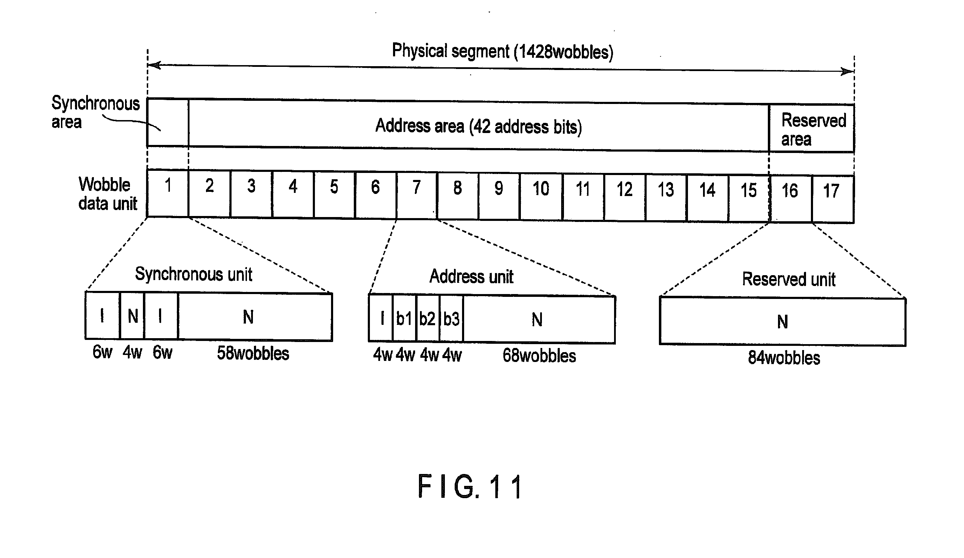

FIG. 11 shows a layout of the physical segment. The physical segment is formed by wobble or width modulation with a wave number of 1428, and is partitioned into 17 wobble data units. The leading wobble data unit is referred to as a synchronous unit and formed of 6 inverted wobbles (I), 4 normal wobbles (N), 6 inverted wobbles (I), and 68 normal wobbles (N). An address unit starts with 4 inverted wobbles (I) and ends with 68 normal wobbles (N). Address information for which four wobbles represent 1-bit information is recorded in 12 wobbles arranged between the 4 inverted wobbles and the 68 normal wobbles. A reserved unit as a whole is formed of 68 normal wobbles (N). The physical segment comprises 14 address units, and thus 42-bit address information can be recorded in one physical segment.

### (Bit assignment for the physical address)

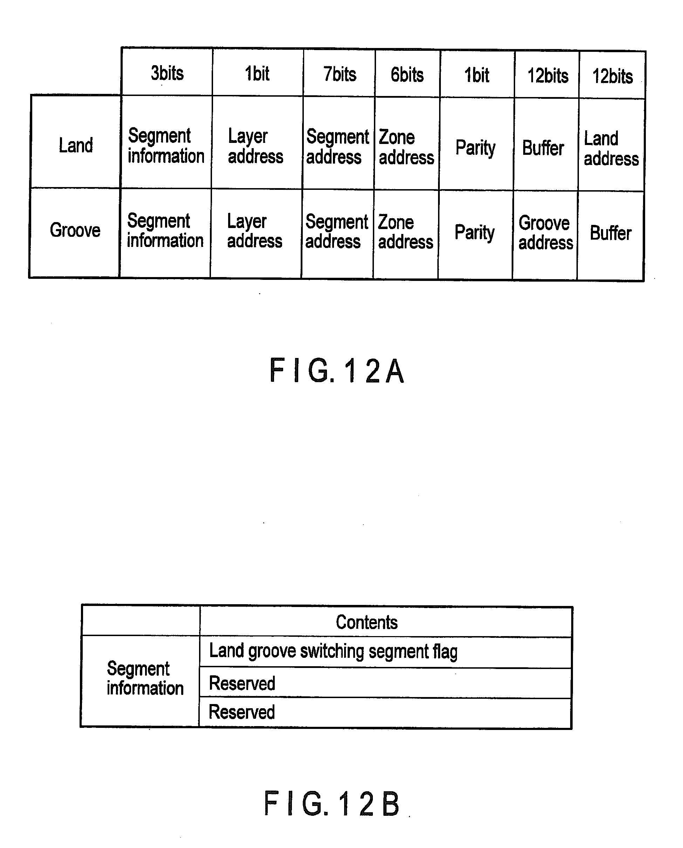

FIG. 12 shows bit assignment for the address information. As shown in FIG. 12A, the address information comprises binary data of 42 bits in total, and the bit assignment varies between the land and the groove. As shown in FIG. 12B, the segment information includes a land groove switching segment flag. The land groove switching segment flag is one for a segment immediately before the segment in which the land is switched to the groove, or vice versa, and is zero for the other segments. Values corresponding to a layer number, a segment number, and a zone number are recorded in a layer address, a segment address, and a zone address. A parity for error correction for 17-bit information from the segment information to the zone address is recorded in a parity bit. All of the bit pattern of the 18 bits from the segment information to the parity perfectly matches between the land and the groove. On the other hand, the subsequent 12 bits correspond to buffer information for the land and to a groove address for the groove. Moreover, the final 12 bits correspond to a land address for the land and to buffer information for the groove. Each of the land address and the groove address is the number of the track in the segment which is expressed by a gray code (reflected binary number).

### (Physical shape of the wobble and the reproduction signal)

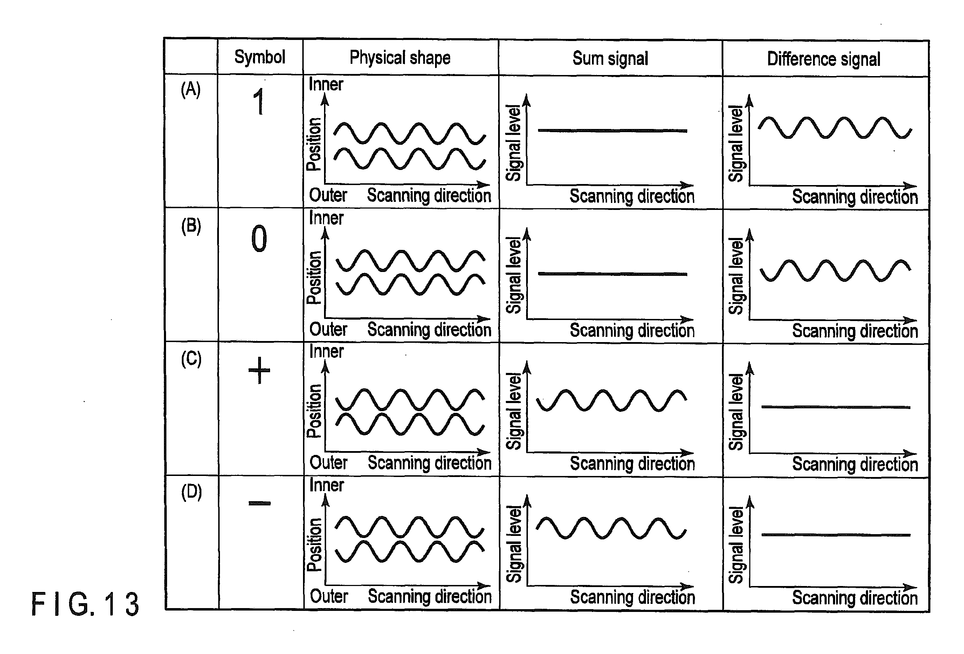

FIG. 13 shows symbols, physical shapes, a variation in sum signal level during reproduction, and a variation in difference signal level. Here, the sum signal refers to a full addition signal for light delivered to the light-receiving element (red) 305 in the information recording and reproducing apparatus. The difference signal refers to a signal (push-pull signal) for the difference between two signals for the respective light rays into which light delivered to the light-receiving element (red) 305 is split in a direction perpendicular to the tracks.

Sections (A) and (B) in FIG. 13 show the manner of wobble modulation. The wobble modulation is based on grooves formed to meander like a sine wave with a very small amplitude with respect to the inner and outer circumferential directions and that different phases of the wobble indicate symbols 1 and zero, respectively. As shown in FIG. 13(A), the phase first deflected to the inner circumferential side is defined to be zero. As shown in FIG. 13(B), the phase first deflected to the outer circumferential side is defined to be 1. Furthermore, the phase first deflected to the inner circumferential side is defined to be a normal wobble. The phase first deflected to the outer circumferential side is defined to be an inverted wobble. Additionally, if the information recording and reproducing apparatus reproduces a track subjected to the wobble modulation, the sum signal has a constant level, but the difference signal is a sine signal corresponding to the wobble shape of the groove. The signal processing circuit 5 of the information recording and reproducing apparatus utilizes this sine difference signal to read address information and to generate a clock.

Sections (C) and (D) in FIG. 13 show the manner of width modulation. The width modulation is utilized to record different items of information in the land and the groove, respectively. A shape starting with a small width is defined to be a symbol +. A shape starting with a large width is defined to be a symbol -. Furthermore, if the information recording and reproducing apparatus reproduces a track subjected to the width modulation, the sum signal is a sine signal corresponding to a change in the width of the groove. However, the difference signal has a constant level and is unchanged.

### (Track address)

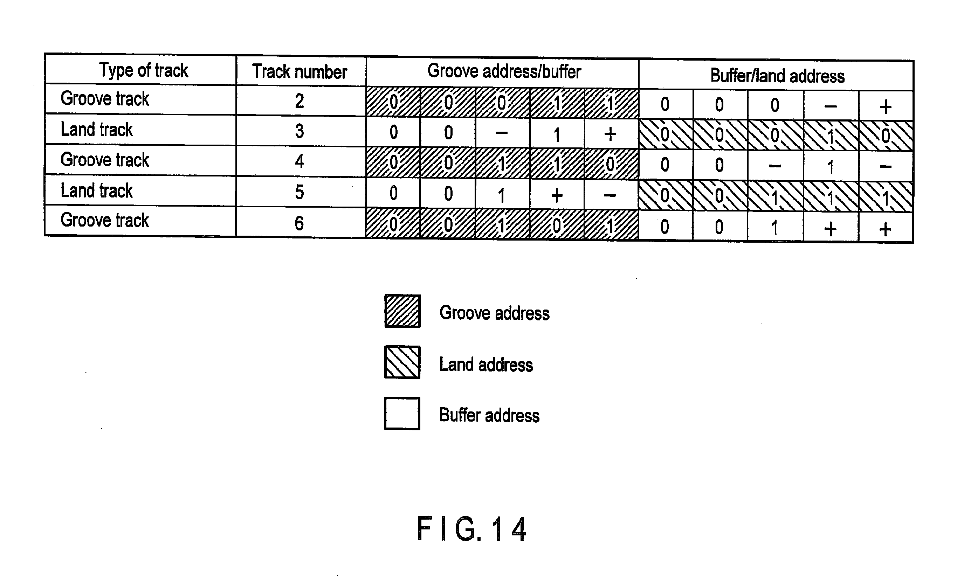

FIG. 14 shows examples of a groove address and a land address. Normally, in a mastering operation that is a step of manufacturing a disc substrate, a groove structure is formed by engraving a groove portion. At this time, the modulation shown in FIG. 13(A) is carried out in portions of FIG. 14 which correspond to zero. The modulation shown in FIG. 13(B) is carried out in portions of FIG. 14 which correspond to 1. The modulation shown in FIG. 13(C) is carried out in portions of FIG. 14 which correspond to +. The modulation shown in FIG. 13(D) is carried out in portions of FIG. 14 which correspond to -. Then, such address information as shown in FIG. 14 can be recorded both in the land tracks and in the groove tracks.

### (Relationship between the physical address and the record data)

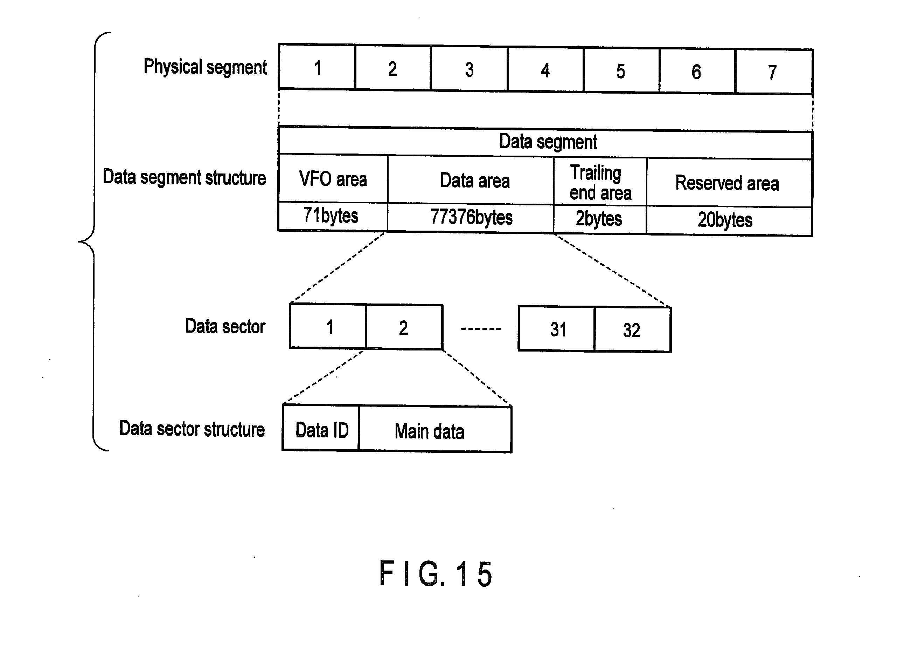

Now, the relationship between the layout of addresses in the address area of the servo layer and the record information recorded in the inner and outer circumferential format areas and information recording area of the data layer will be described. The record information is recorded in each area of the data layer in accordance with tracking control based on tracking signals from the tracks in the address area and the clock and address information generated from wobble signals. Here, the record information is recorded in units of data segments shown in FIG. 15. The data segment comprises a variable frequency oscillator (VFO) area, a data area, a termination area, and a reserved area, and record data in a given pattern is recorded in the VFO area. User data subjected to modulation coding such as 17 modulation and error correcting coding such as LDPC or RS is stored in the data area. A specified pattern indicative of the end of the data area is recorded in the termination area. Here, the data segments synchronize with the physical segments, and seven physical segments are arranged so as to coincide with one data segment. The data area includes 32 data sectors, and each of the data sectors comprises a data ID and main data.

### (pre-formatting marks)

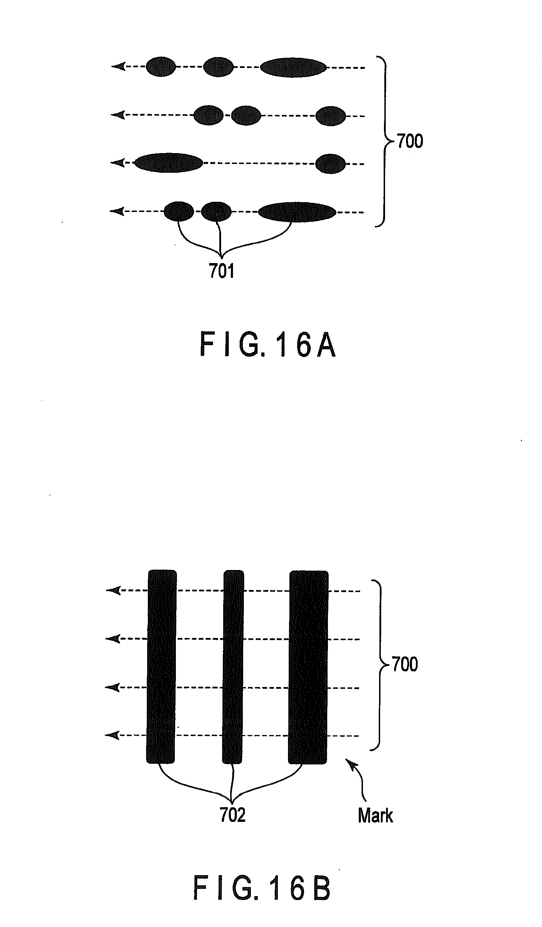

FIG. 16 shows the physical shape of pre-formatting recording marks that are used to record pre-format information. FIG. 16A shows an example of recording with a sequence of elliptic recording marks 701, on each track 700. The sequence of recording marks 701 is shaped similarly to sequences of recording marks recorded in the other areas, that is, in the inner and outer circumferential format areas and information recording area. FIG. 16B shows an example of recoding with a sequence of recording marks 702 shaped to extend in the radial direction. The use of the sequence of marks 702 in FIG. 16B has the advantage of enabling information to be reproduced without tracking control.

### (Recording procedure)

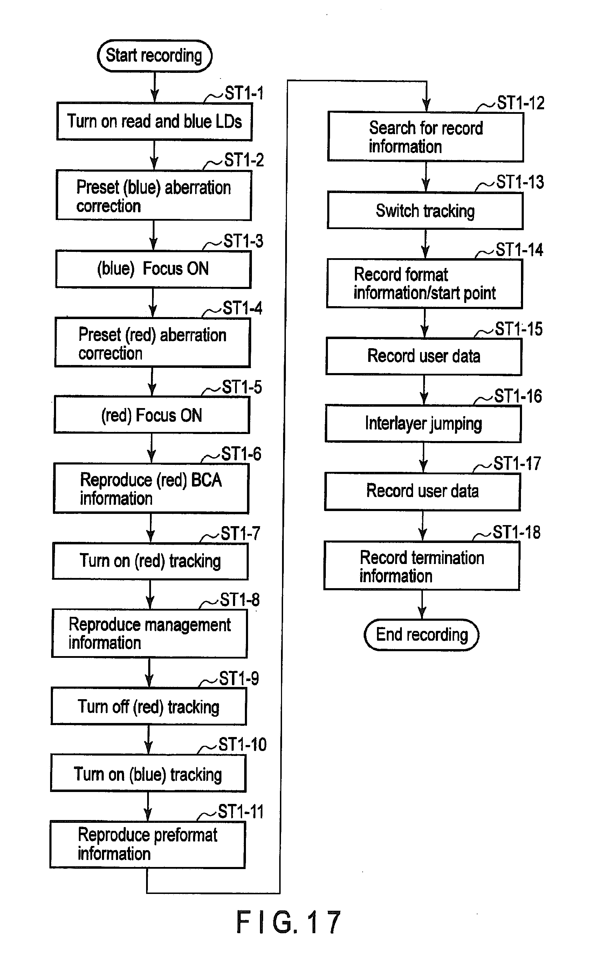

FIG. 17 shows a flowchart of a recording operation that is performed by the information recording and reproducing apparatus. In a first step (ST1-1), the laser driving circuits (red and blue) are controlled to turn on the red LD 300 and the blue LD 301. In a second step (ST1-2), the signal processing circuit 5 calculates the preset amount of aberration correction required for a recording layer that is a target for recording, and an aberration control circuit (blue) 407 drives the aberration correction mechanism (blue) 306 to apply wave aberration to blue laser light. In a third step (ST1-3), a focus control circuit (blue) 403 starts a focus operation to concentrate the blue laser light on the target recording layer. In a fourth step (ST1-4), the signal processing circuit 5 calculates the preset amount of aberration correction required for SL0 that is a target for red laser concentration, and an aberration control circuit (red) 408 drives the aberration correction mechanism (red) 303 to apply wave aberration to red laser light. In a fifth step (ST1-5), a focus control circuit (red) 405 starts a focus operation to concentrate the red laser light on SL0, which is the target. In a sixth step (ST1-6), the BCA area of SL0 is subjected to reproduction. The signal processing circuit 5 receives a signal from the BCA area which has been received by the light-receiving element (red) 305, and allows the signal processing block to read BCA information. The controller reads the type of format of the disc being subjected to reproduction and the total number of items of recorded information from the BCA area to check whether or not recording is to be carried out on the medium. The controller also checks the address of the management information that is to be subsequently read based on the servo layer arrangement information. The controller further reads the encryption key information as necessary. In a seventh step (ST1-7), PUH 3 drives and moves the focal spot of the red laser light to a management information area. Moreover, the tracking control circuit (red) 406 starts a tracking operation to allow the focal spot of the red laser light to follow the tracks formed in the management information area of SL0. In an eighth step (ST1-8), management information is reproduced from SL0. The signal processing circuit 5 receives a signal from the management area which has been received by the light-receiving element (red) 305, and allows the signal processing block to read the management information. The controller reads detailed information such as the type of format of the disc being subjected to reproduction and the total number of items of recorded information from the management information to check whether or not recording is to be carried out on the medium. Additionally, based on the information area arrangement information, the controller checks the address of the address area corresponding to the pre-format area of the data layer which is to be subsequently subjected to reproduction, and checks the address of the address area corresponding to the information area that is to be subsequently subjected to reproduction. The controller further reads the reproduction power information, the recording power information, and the recording pulse information, checks the optimum power of the blue laser light for recording and reproduction and the like, and optimizes the settings for the power control circuit (blue) 401 and the pulse modulation circuit 402. In a ninth step (ST1-9), PUH 3 drives and moves the focal spot of the blue laser light to the pre-format area. Then, the tracking control of the tracking control circuit (red) 406 is turned off. In a tenth step (ST1-10), the tracking control of the tracking control circuit (blue) 404 is turned on to allow the focal spot of the blue laser light to follow the tracks of pre-format information pre-recorded in the pre-format area. In an eleventh step (ST1-11), the pre-format information is reproduced from the data layer. The signal processing circuit 5 receives a signal from the pre-format area which has been received by the light-receiving element (blue) 307, and allows the signal processing block to read the pre-format information. The controller reads the type of format of the disc being subjected to reproduction and the layer number from the pre-format information to check whether or not recording is to be carried out on the medium. Additionally, based on the information recording arrangement information, the controller checks the address of the address area corresponding to the information area that is to be subsequently reproduced. The controller further reads the reproduction power information, the recording power information, and the recording pulse information, checks the optimum power of the blue laser light for recording and reproduction and the like, and optimizes the settings for the power control circuit (blue) 401 and the pulse modulation circuit 402. In a twelfth step (ST1-12), the controller utilizes the address of the address area of the servo layer to search the format area of the data layer to determine whether or not any format information is pre-recorded. If no format information is present at a predetermined address, the controller moves to the address position of an initial recording start point and shifts to a thirteenth step (ST1-13). If any format information is present at the predetermined address, the tracking control circuit (blue) 404 performs control to reproduce the recorded format information. Based on this information, the controller searches for the address of final recording position of the record information recorded in the data area and moves to a recording start point. In the thirteenth step (ST1-13), if the tracking control circuit (blue) 404 is performing control while information recorded in the data layer is being reproduced, the controller stops the control, and the tracking control circuit (red) 406 performs tracking control on the tracks in the servo layer. In a fourteenth step (ST1-14), the controller carries out test recording in the format area to record format information or start point information in the data layer starting at the recording start point. In a fifteenth step (ST1-15), the controller records user data in units of data segments. In a sixteenth step (ST1-16), the controller carries out interlayer jumping to shift the data layer corresponding to the recording target to the next layer. At this time, the focus control circuit (blue) 403 carries out an interlayer jumping process to move the focal spot of the blue laser light to the next data layer. At the same time, the focus control circuit (red) 405 also carries out an interlayer jumping process and moves the focal spot of the red laser light to the other servo layer. In a seventeenth layer (ST1-17), the tracking control circuit (red) 406 performs tracking control on the tracks in the servo layer to continuously record the user data in the data layer in units of data segments. Here, in the seventeenth step, the tracking control is performed on the servo layer in which spiral tracks spiraling in the direction opposite to the direction of the spiral tracks in the fifteenth step are formed, and thus the focal spot moves in a direction opposite to the direction in the fifteenth step. For example, given that the recording progresses from the inner circumference toward the outer circumference in the fifteenth step, the recording progresses from the outer circumference toward the inner circumference in the seventeenth step. As described above the recording procedure according to the present embodiment enables information to be consecutively recorded in a plurality of recording layers simply by the jumping operation without the need for radial movement of the focal spot over a long distance. In an eighteenth step (ST1-18), termination information is recorded. When the recording of the termination information is completed, the recording operation is completed.

### (Reproduction procedure)

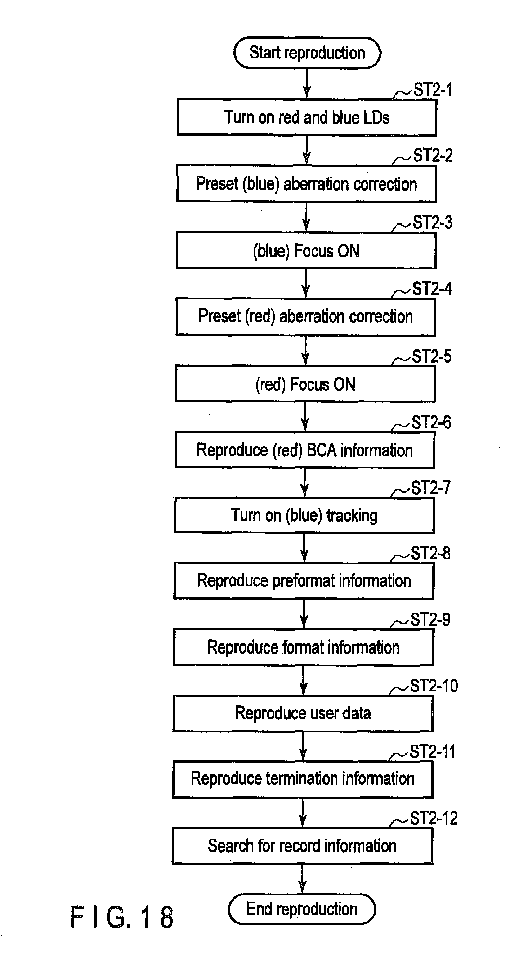

FIG. 18 shows a flowchart of a reproduction operation that is performed by the information recording and reproducing apparatus. In a first step (ST2-1), the laser driving circuits (red and blue) 301 and 311 are controlled to turn on the red LD 300 and the blue LD 301. In a second step (ST2-2), the signal processing circuit 5 calculates the preset amount of aberration correction required for a recording layer that is a target for recording, and the aberration control circuit (blue) 407 drives the aberration correction mechanism (blue) 306 to apply wave aberration to blue laser light. In a third step (ST2-3), the focus control circuit (blue) 403 starts a focus operation to concentrate the blue laser light on the target recording layer. In a fourth step (ST2-4), the signal processing circuit 5 calculates the preset amount of aberration correction required for SL0 that is a target for red laser concentration, and the aberration control circuit (red) 408 drives the aberration correction mechanism (red) 303 to apply wave aberration to red laser light. In a fifth step (ST2-5), the focus control circuit (red) 405 starts a focus operation to concentrate the red laser light on SL0, which is the target. In a sixth step (ST2-6), the BCA area of SL0 is subjected to reproduction. The signal processing circuit 5 receives a signal from the BCA area which has been received by the light-receiving element (red) 305, and allows the signal processing block to read BCA information. The controller reads the type of format of the disc being subjected to reproduction and the total number of items of recorded information from the BCA area to check whether or not recording is to be carried out on the medium. The controller further reads the encryption key information as necessary. In a seventh step (ST2-7), PUH 3 drives and moves the focal spot of the red laser light to a pre-format information area. Moreover, the tracking control circuit (blue) 404 starts a tracking operation to allow the focal spot of the blue laser light to follow the tracks of pre-format information recorded in the management information area of SL0. In an eighth step (ST2-8), the pre-format information is reproduced from SL0. The signal processing circuit 5 receives a signal from the pre-format area which has been received by the light-receiving element (blue) 307, and allows the signal processing block to read the pre-format information. The controller reads the type of format of the data layer being subjected to reproduction and the layer number from the pre-format information to check whether or not recording is to be carried out on the data layer. Additionally, based on the information recording arrangement information, the controller checks the address of the address area corresponding to the information area of the data layer which is to be subsequently subjected to reproduction. The controller further reads the reproduction power information, checks the optimum power of the blue laser light for recording and reproduction and the like, and optimizes the settings for the power control circuit (blue) 401. In a ninth step (ST2-9), the controller utilizes the address information recorded in the data layer to search the format area of the data layer, and reproduces the recorded format information. Based on the reproduced information, the controller searches the address of the position where the record information recorded in the data area to check the contents of the record information recorded in the data area. In a tenth step (ST2-10), the controller allows the focal spot of the blue laser light to follow the record information recorded in the data layer. The signal processing circuit 5 receives a signal from the data area which has been received by the light-receiving element (blue) 307, and allows the signal processing block to read the address information, the user data, and the like. If the user data spans a plurality of layers, an interlayer jumping process is carried out as necessary. Here, in the information recording medium 1 according to the present embodiment, the record information is formed of opposite spiral tracks in the adjacent data layers. Thus, the information consecutively recorded in a plurality of recording layers can be reproduced simply by the jumping operation without the need for radial movement of the focal spot over a long distance. In an eleventh step (ST2-11), the termination information is reproduced. In a twelfth step (ST2-12), the controller utilizes the information recorded in the termination information to determine whether or not any other record information is recorded in the data area. If no other record information is present, the controller ends reproducing the information.

### (Changes in the state of the data layer)

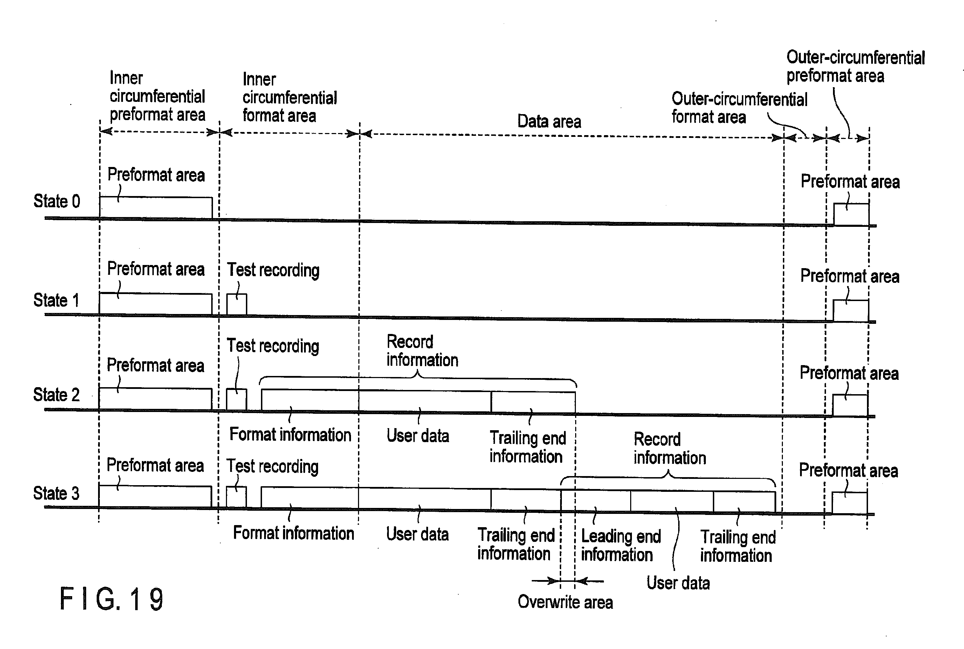

FIG. 19 shows changes in the state of the data layer during recording of information in the data area. State 0 is indicative of the data layer on which recording is not carried out. At this time, the pre-format information is only recorded in the pre-format area. State 1 is indicative of the data layer on which test recording has been carried out. Before recording information in the information recording medium 1, the information recording and reproducing apparatus records and reproduces a pattern for test recording in and from the medium to recheck and optimize the recording conditions such as the recording power and the pulse width. State 2 is indicative of the data layer on which a series of recording operations have been performed. Format information, that is, saved information such as the format, leading position, and trailing position of user data 1, is recorded in the format area. The user data 1 is recorded in the data area in units of data segments, and the termination information is recorded at the trailing of the user data 1. The termination information includes the previously recorded and saved information such as the format, start position, and end position of user data 1, as well as overwrite buffer information. State 3 is indicative of the information recording area in the state 2 in which information is additionally recorded. The additionally written record information includes start point information and end point information before and after the user data, respectively. The start point information and the end point information include saved information such as the format, leading position, and trailing position of the previously recorded user data 1 and saved information such as the format, leading position, and trailing position of the previously recorded user data 2, as well as overwrite buffer information recorded so as to partly overlap the end point information of record information 1.

### (Contents of recording system information)

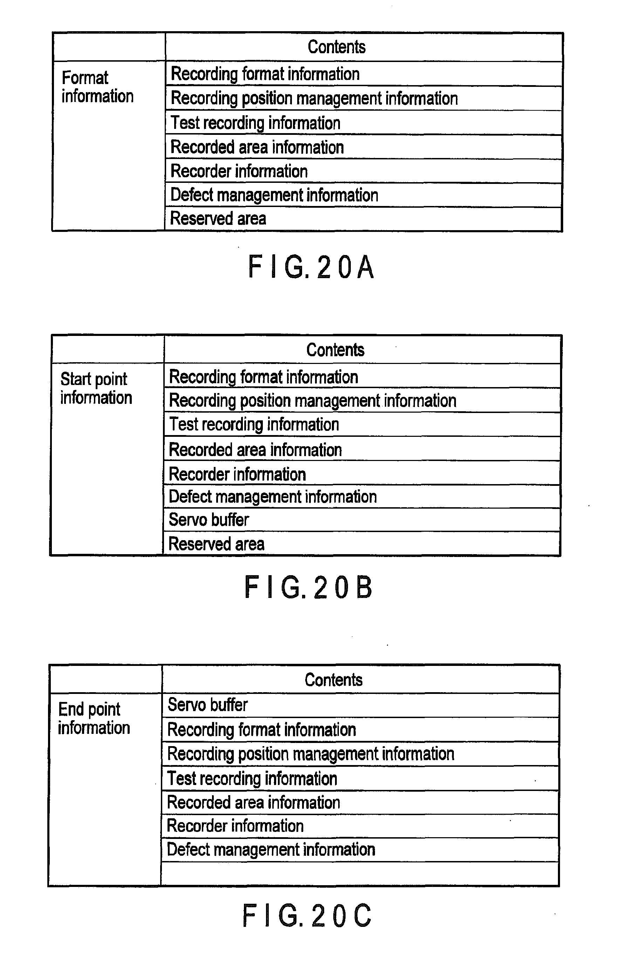

FIG. 20 shows a list of contents of the format information, the start point information, and the end point information. FIG. 20A is a list regarding the contents of the format information. A recording format type is information indicative of the type of format of the record information. Information area arrangement information is indicative of the addresses of the address areas corresponding to the start positions and end positions of the inner and outer circumferential format areas of the data layer and the address of the address area corresponding to the start position and end position of the information recording area. These items of information change depending on the state of the record information. Test recording information is indicative of address information on the portion used for the test recording. Recorded area information is indicative of the addresses of the start position and end position of the record information, the size of an actually effective area in the user data, and the like. Recorder information includes saved information that identifies the apparatus used for recording and saved optimized recording conditions. Defect management information is indicative of the address of a spare area for defect management, the addresses of data segments to be replaced, and the like. FIG. 20B and FIG. 20C show the start point information and the end point information, respectively. Buffer information such as all 0s is saved in a servo buffer area.

### (Other embodiments)

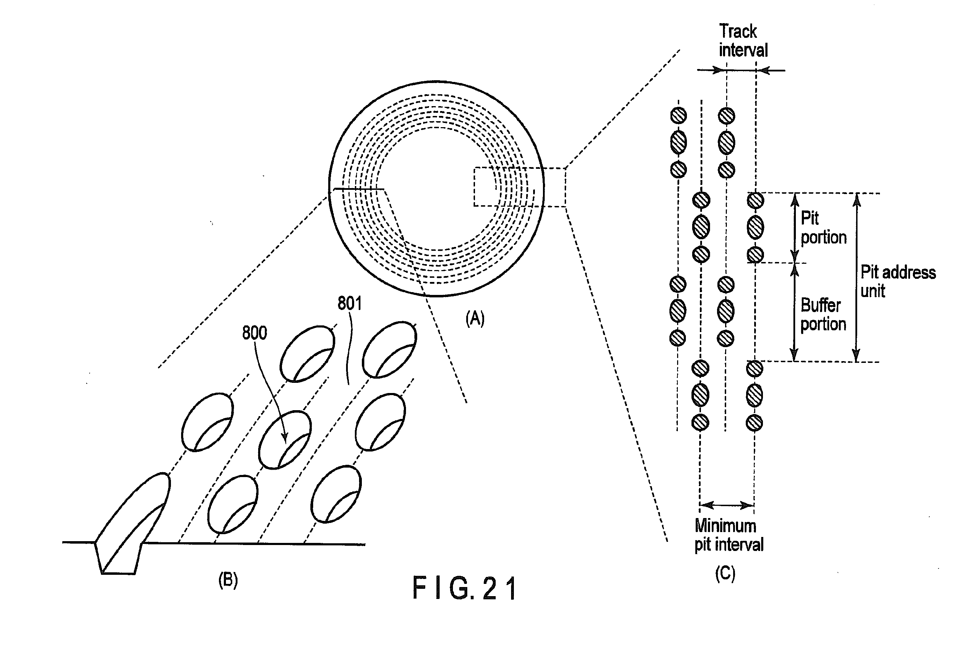

FIG. 21 shows another embodiment of the physical structure of tracks. According to the embodiment shown in FIG. 21, an address is recorded by forming a pit row 800 in an address area of the servo layer shown in (A), as shown in (B). FIG. 21(B) is a cross-sectional perspective view in which a land is shown at 801. The pit row forms a single spiral track spiraling all along the circumference of the disc. Moreover, as shown in FIG. 21(C), buffer portions and pit portions are alternately arranged so as to avoid placing the pits in one track in juxtaposition with the pits in the adjacent track. Thus, the minimum pit interval is double the track interval. This configuration allows pit information to be stably read even with a reduced track interval. For example, if the track interval is 0.32 µm, the radially minimum pit interval is 0.64 µm.

Compared to the wobble, the pit row generally allows an increase in information recording density in a scanning direction of laser light (a progress direction for the tracks), thus enabling more detailed address information and management information to be recorded. On the other hand, normal optical discs with signals recorded on the tracks disadvantageously prevent signals from being recorded in the pit row portions, but the information recording medium according to the present embodiment separates the servo layer from the data layer, enabling information to be consecutively recorded even in the pit portions in the data layer. This enables an increase in information recording density.

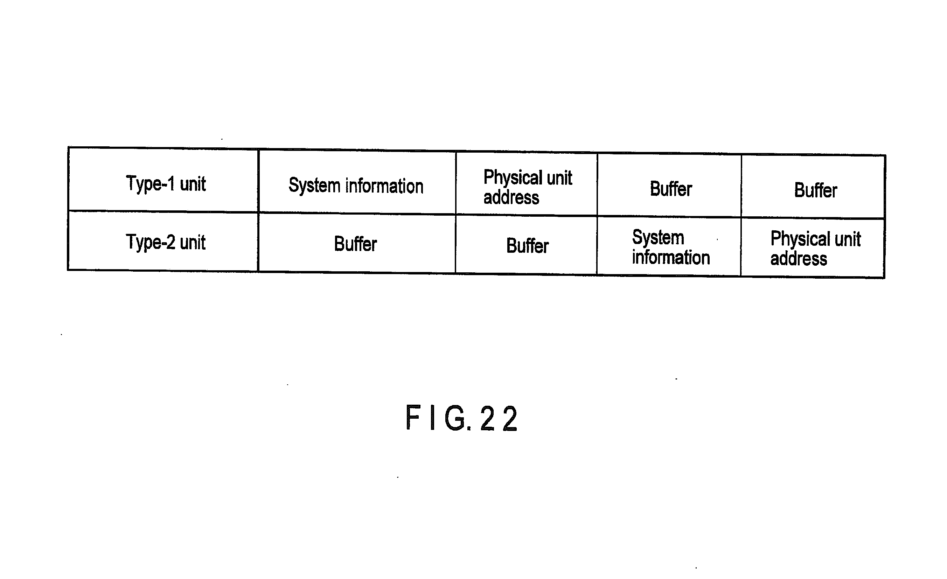

FIG. 22 shows bit assignment for pit address units arranged in the pit row track. As shown in FIG. 22, the pit address units are classified into a plurality of types. A buffer is an area in which no row of pits is arranged. System information is an area to which information such as the type of physical units and the layer number of the servo layer and management information such as the type of disc are saved. A physical unit address is an area to which a physical unit address that increments for every physical unit is saved. Thus, the information recording medium according to the present embodiment involves a plurality of types of pit address unit in which address information on the row of pits is recorded, and the position of the buffer area varies depending on the type of pit address unit. The pit address units, when placed in the disc, are selected so as to avoid the overlapping between the adjacent items of system information and between the adjacent physical unit address portions. Then, a disk with such a track structure as shown in FIG. 21 can be implemented. Furthermore, when an information recording and reproducing apparatus that reproduces information from such an information recording medium subjects the servo layer to reproduction, servo control needs to be performed according to a sample servo scheme of acquiring a tracking error signal from the pit portion. Thus, with the servo layer taken into account, the number of bits in the physical unit address is between one hundred and several thousands. As a result, given that for example, a repetition frequency for the bits is 66 MHz, a repetition frequency for the physical unit addresses is between several hundred kilohertz and several tens of kilohertz.

For normal reproduction, the bandwidth of tracking servo control is several kilohertz. Thus, the information recording medium according to the present embodiment enables information to be stably reproduced. On the other hand, normal optical discs with signals recorded on the tracks disadvantageously prevent signals from being recorded in the pit row portions, and thus interruption of recording with such a frequency may disadvantageously make the recording unstable. However, the information recording medium according to the present embodiment separates the servo layer from the data layer, enabling information to be consecutively recorded even in the pit portions in the data layer. This enables an increase in information recording density.

Several embodiments of the present invention have been described. However, these embodiments have been presented as examples and are not intended to limit the scope of the invention. These new embodiments can be carried out in various other forms, and various omissions, substitutions, and changes may be made to the embodiments without departing from the scope of the invention. The embodiments and modifications thereof are included in the scope and spirit of the invention and similarly embraced in the scope of the invention set forth in the claims and equivalents.

## Claims

1. An information recording medium comprising:
a first servo layer, a second servo layer, and a data layer, the information recording medium further comprising:
a first spiral track and a second spiral track formed between the first servo layer and the second servo layer and spiraling in opposite directions.

2. An information recording medium comprising:
a servo layer; and
a data layer,
wherein the servo layer comprises a spiral track formed of a groove, and address information is recorded in the groove by wobble modulation and width modulation.

3. An information recording medium comprising:
a servo layer comprising a first spiral track with a first pit row area and a first non-pit-row area alternately formed therein and a second spiral track with a second pit row area and a second non-pit-row area alternately formed at positions staggered and shifted from the first pit row area and the first non-pit-row area in a track direction; and
a data layer.

4. An information recording apparatus configured to record information in an information recording medium including a first servo layer, a second servo layer, and a plurality of data layers with serial numbers and further comprising a first spiral track and a second spiral track formed between the first servo layer and the second servo layer and spiraling in opposite directions, the information recording apparatus comprising:
tracking control means for performing either first tracking control for the first spiral track in the first servo layer or second tracking control for the second spiral track in the second servo layer; and
control means for recording information in the plurality of data layers under the first tracking control or the second tracking control.

5. The information recording apparatus of claim 4, wherein
the tracking control means performs the first tracking control on odd-numbered data layers, and performs the second tracking control on even-numbered data layers.

6. An information recording apparatus configured to record information in an information recording medium including a first servo layer, a second servo layer, and a plurality of data layers with serial numbers and further comprising a first spiral track and a second spiral track formed between the first servo layer and the second servo layer and spiraling in opposite directions, the information recording apparatus comprising:
tracking control means for performing tracking control on the data layer; and
reproduction means for reproducing information from the data layer under the tracking control.
